# EUROPÄISCHE PATENTANMELDUNG

(11) **EP 1 708 469 A1**
(43) Veröffentlichungstag der Anmeldung: **04.10.2006**
(21) Anmeldenummer: 05007040.8
(22) Anmeldetag: 31.03.2005
(51) Int. Cl.: H04M 3/523, H04M 7/00, H04M 3/51

(54) **Verfahren und Anordnung zur Anschaltung eines Multimedia- Terminals an ein Call Center**

(71) Anmelder: Siemens Schweiz AG, 8047 Zürich (CH)
(72) Erfinder: Di Pietro, Sergio, 8800 Thalwill (CH); Notari, Ruben, 8050 Zürich (CH); Weidmann, Rudolf, 8006 Zürich (CH); Gutmann, Reto, 8903 Birmensdorf (CH); Suter, Hansruedi, 9200 Gossau (CH)
(74) Vertreter: Kley, Hansjörg

(57) **Zusammenfassung**

Zur Nutzung einer bestehenden Call Center Infrastruktur (CC, CC Client) wird eine Anschaltung/Ankopplung eines Multimedia-Terminals (RD) vorgeschlagen, bei der durch eine Meldung(1:) an ein Remote Desk Center (RDC) gesandt wird. Dieses Remote Desk Center (DC) fingiert bzw. initiiert in der dem Call Center zugehörigen Teilnehmervermittlungsanlage (CC PBx) einen Anruf (5:) aus dem leitungsvermittelten Netz (PSTN/ISDN). Bei der Durchschaltung dieses Anrufes wird parallel eine Videoverbindung (13:) zwischen Mtiltimedia-Terminal (RD) und dem Agentenarbeitsplatz (A_Dev, CC dient) etabliert. Auf diese Weise können die bestehenden Leistungsmerkmale eines Call Centers wie z.B. Skill based Routing, Reporting, Online Monitoring, usw. , weiter genutzt werden.

## Beschreibung

Die vorliegende Erfindung betrifft ein Verfahren und eine Anordnung zur Anschaltung eines Multimediaterminals an ein Call Center nach dem Oberbegriff des Patentanspruches 1 bzw. 6.

Im folgenden werden anstelle einer deutschen Nichtfachsprache die englischsprachige Nomenklatur und Akronyme aus der Standardisierung der Organisationen ITU-T, ETSI und IETF benutzt, wie z.B.
«CC» Call Center;
«DSS1» Digital Subscriber Signalling System no. 1;
«VoIP» voice over IP;
«SIP» Session Initiation Protocol.
Durch die Verwendung standardisierter Begriffe und Akronyme lassen sich Unklarheiten vermeiden. Eine Liste der verwendeten Akronyme, Abkürzungen und Begriffe am Schluss dieses Dokumentes bildet einen integralen Bestandteil dieser Schrift.

Die zunehmende Rationalisierung und Optimierung der personellen Ressourcen bei Dienstleistungsbetrieben wie Bahnen, Postdienste usw. ist oft mit einem Abbau der tatsächlichen Breite des Angebotes verbunden. Beispielsweise werden für mittelgrosse und kleine Bahnhöfe die Schalter geschlossen und durch Billettautomaten ersetzt.

Es ist technisch möglich, einen Billettautomaten durch einen virtueller Schalter (engl. «remote desk») zu ersetzen. Ein virtueller Schalter beinhaltet ein Multimedia-Terminal, über das ein Benutzer mit einem entfernt sitzenden Kundenberater (engl. «agent») in Kontakt treten kann. Dabei führt der Agent die für die gewünschte Dienstleistung erforderlichen Aktionen aus und durch einen am virtuellen Schalter vorhandenen Drucker können Billette oder Reservationsscheine ausgedruckt werden. Der Bezahlvorgang kann auf die übliche Weise über eine Einheit mit einer Kreditkarte, Postcard oder mit Bargeld wie Münz und Noten vorgenommen werden.

In [1] ist ein solcher virtueller Schalter in der Form eines Menschen offenbart. Diese Lösung impliziert das Vorsehen einer neuen Infrastruktur, die parallel zu einer bestehenden Infrastruktur wie ein Call Center CC errichtet werden muss. Bekanntlicherweise verfügen Bahnen und Postdienste über zentrale oder dezentrale Call Centers, bei denen mittels eines Telefonanrufes auf eine sogenannte Mehrwertnummer eine Dienstleistung in Form einer Auskunft oder einer Bestellung erhältlich ist. Der Betrieb von virtuelle Schaltern in einem Versorgungsgebiet erfordert demzufolge eine «neue» bzw. parallele Infrastruktur, die heutzutage eine VoIP Telephonie Plattform umfasst und eine dezidierte Call Center Infrastruktur mit Unterstützung von Video Kommunikation beinhaltet. Diese Lösung bietet keinen Investitionsschutz.

Die wirtschaftliche Bedeutung solcher virtueller Schalter ist in der Studie [3] von Gartner dargelegt worden, ohne dass dabei konkrete Lösungsmöglichkeiten gezeigt werden konnten.

Anstelle der vorgenannten Lösung ist es alternativ auch möglich, neben der bestehenden Infrastruktur, das ist ein klassisches Telephonie - Call Center eine videokvnferenz Lösung zu installieren. Diese alternative Lösung ist für den Call Center Betreiber und für den Agenten nicht zufriedenstellend weil:
- Keine Reporting Möglichkeit über den «video-Call» und verfälschung des existierenden Call Center Reporting;
- keine online Monitoring Möglichkeit über den «Video-call» und verfälschung der existierenden Call Center online Anzeige;
- keine Unterstützung von eskill based Routing», nur eine Punkt zu Punkt verbindung wird gewährleistet und
- der Agent muss zwei verschiedene Endgeräte benutzen: Telefongerät Call Center und Personalcomputer für Videodienst.

Für eine Implementierung von multimedialen Konferenzsystemen auf der Basis eines unternehmensweiten wie auch eines unternehmensüberreifenden Netzwerkes wird vorzugsweise das Protokoll SIP eingesetzt. So ist in [2] ein System und ein Verfahren für die Erbringung eines Mehrwertdienstes in einem integrierten Telekommunikationsnetz offenbart, wobei auf der einen Seite die Protokolle SIP und auf der Netzseite das Protokoll INAP für die Mehrwertdienste eingesetzt sind.

Der vorliegenden Erfindung liegt die Aufgabe zugrunde, eine Anschaltung von virtuellen multimedialen Schaltern an eine bestehende Telephonie und Call Center Infrastruktur anzugeben, bei der die bekannten Leistungsmerkmale des Call Centers wie z.B. «Skill based Routing», Reporting, Online Monitoring, usw., weiter genutzt werden können, ohne Verlust bereits getätigter Investitionen.

Diese Aufgabe wird für das Verfahren durch die im Patentanspruch 1 und für die Anordnung durch die im Patentanspruch 6 angegebenen Merkmale gelöst.

Durch die erfindungsgemässen Verfahrensschritte, wonach
- A: von einer Applikation auf dem Multimedia-Terminal eine Meldung an ein Remote Desk Center übermittelt, wobei das Remote Desk Center mit der Teilnehmervermittlungsanlage verbunden ist;
- B: das Remote Desk Center initiiert mit der empfangenen Meldung über die Teilnehmervermittlungsanlage einen Anruf aus dem leitungsvermittelten Telekommunikationsnetz;
- C: der im Verfahrensschritt B erzeugte Anruf wird an einen Agentenplatz durchgeschaltet;
- D: Nach erfolgter Durchschaltung gemäss dem Verfahrensschritt C wird zwischen dem Agentenplatz und dem Multimedia-Terminal eine videoverbindung etabliert;
ist ein verfahren geschaffen, bei dem die bei einem Call Center verfügbaren Leistungsmerkmale weiter genutzt werden können, da jeder Anruf von einem Multimedia-Terminal wie ein gewöhnlicher Anruf über das öffentliche Telekommunikationsnetz behandelt wird und somit ununterscheidbar von diesen Anrufen ist. Im einzelnen beinhaltet dies folgende Vorteile:
Investitionsschutz der bestehenden Call Center wie auch der vorhandenen Telephonie Infrastruktur.
Das Call Center Management verfügt über die gewohnten «Skill based Routing« Mechanismen, auch für das damit angekoppelte Multimedia-Terminal ausserhalb des leitungsvermittelten Telekommunikationsnatzes.
Das Call Center Management kann die bereits vorhandenen Reporting Mechanismen weiter nutzen.
Das Call Center Management verfügt über die gewohnten online Monitoring Mechanismen
Der Call Center Agent nimmt einen Anruf von einem Multimedia-Terminal wie gewohnt ab und wird unmittelbar anschliessend per Videokommunikation mit dem Multimedia-Terminal verbunden.
   Vorteilhafte Ausgestaltungen der Erfindung sind in weiteren Ansprüchen angegeben.
   Die Erfindung wird nachfolgend anhand der Zeichnung beispielsweise näher erläutert. Dabei zeigen:
   - Figur 1: Struktur eines herkömmlichen Call Centers und Anschaltung an ein leitungsvermitteltes Telekommunikationsnetz;
   - Figur 2: ergänzendende Komponenten zur Anschaltung eines Multimedia-Terminals an ein herkömmliches Call Center;
   - Figur 3: Meldungsablauf in der Übersicht, um ein Anruf von einem Multimedia-Terminal über die Einrichtungen des Call Centers behandeln zu können und
   - Figur 4: detaillierterer Meldungsablauf gemäss der Übersicht von Figur 3.

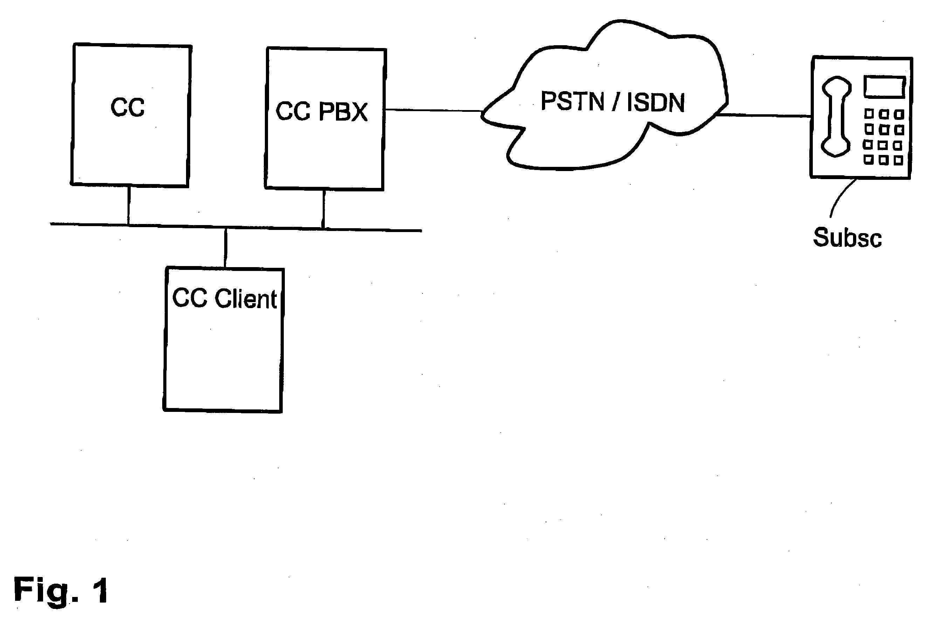

Figur 1 zeigt die Struktur eines herkömmlichen Call Centers CC. Dazu ist eine Teilnehmervermittlungsanlage CC PBX - auch Nebenstelle genannt - vorgesehen, die mit einem leitungsvermittelten Telekommunikationsnetz PSTN / ISDN verbunden ist. Ein von einem Teilnehmer Subsc eingehender Anruf wird dabei aufgrund bestimmter Kriterien wie z.B. A-Nummer einem bestimmten Agenten, das ist eine Person, zugewiesen. Der Agent kann dabei einen Telefonapparat vorzugsweise mit einer Sprechgarnitur benutzen, der mit einem Arbeitsplatzcomputer dezentral oder zentral gekoppelt sein kann. Diese Kopplung erlaubt, bereits vor Eintreten des Anrufes den Kontext zum Anrufer herstellen zu können, beispielsweise aufgrund einer gespeicherten A-Nummer des betreffenden Kunden, diese Kopplung erfolgt über eine sogenannte Kontrahentenschnittstelle. Das Call Center selber kann in leitungsvermittelter Technik oder alternativ zur vorstehenden Angabe in sogenannter VoIP-Technologie ausgebildet sein. In diesem Fall werden sämtliche Daten/Informationen und insbesondere auch der Sprachdienst über das gleiche Medium und die gleichen Applikationen vom Agenten bearbeitet. Für das nachfolgend zu erläuternde Ausführungsbeispiel der vorliegenden Erfindung wird für das Call Center eine Client-Server Infrastruktur angenommen. Deshalb ist in der Figur 1 stellvertretend für die Vielzahl der Agenten-Arbeitsplätze ein CC Client eingetragen.

Im Sinne dieser Schrift wird unter einem virtuellen multimedialen Schalter ein vom Call Center CC entferntes Gerät RD verstanden, das vom Publikum zur Informationsabfrage oder zur Bestellung bzw. zum Kauf einer Dienstleistung oder eines Produktes benutzt werden kann, ohne selber die einzelnen Schritte der Selektion für die Dienstleistung oder das Produkt tätigen zu müssen. Auf dem Gerät RD läuft eine Applikation RDS ab, die letztlich die Funktion des Gerätes RD bildet. Im Sinne dieser Schrift ist anstelle des Gerätes RD von einem Multimedia-Terminal die Rede.

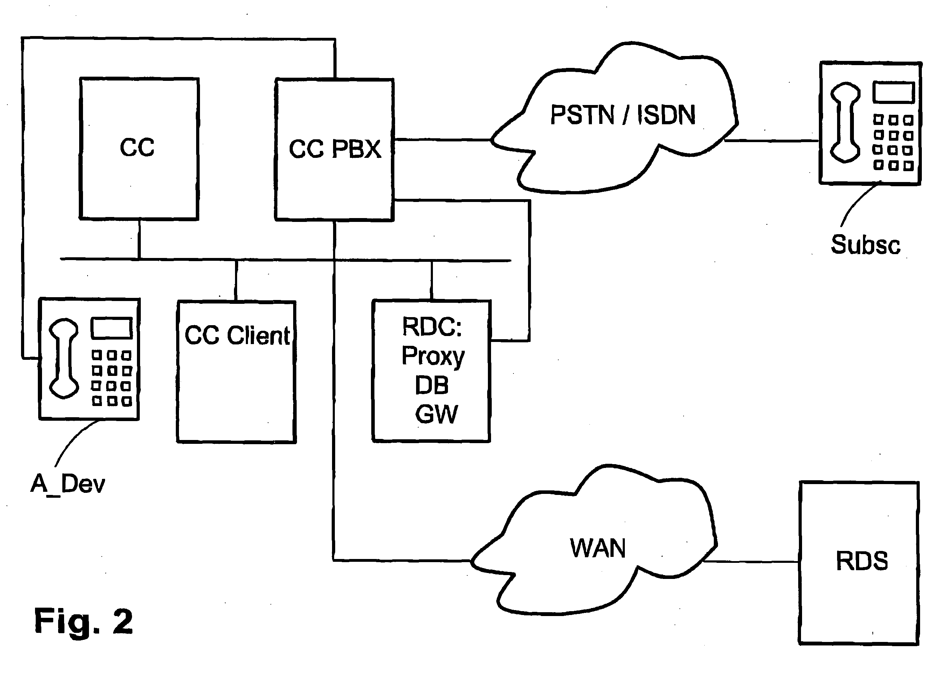

Auf der Ebene der Funktionen werden gemäss der Figur 2 die erforderlichen Komponenten zur Anschaltung einer Mehrzahl solcher Multimedia-Terminals RD erläutert. Eine auf dem Multimedia-Terminal RD ablaufende Applikation RDS ist über ein Netzwerk WAN mit dem Call Center CC verbunden. Dabei ist ein Remote Desk Center RDC vorgesehen, das die zentrale Komponenten Gateway GW, Datenbasis DB und SIP Proxy enthält.

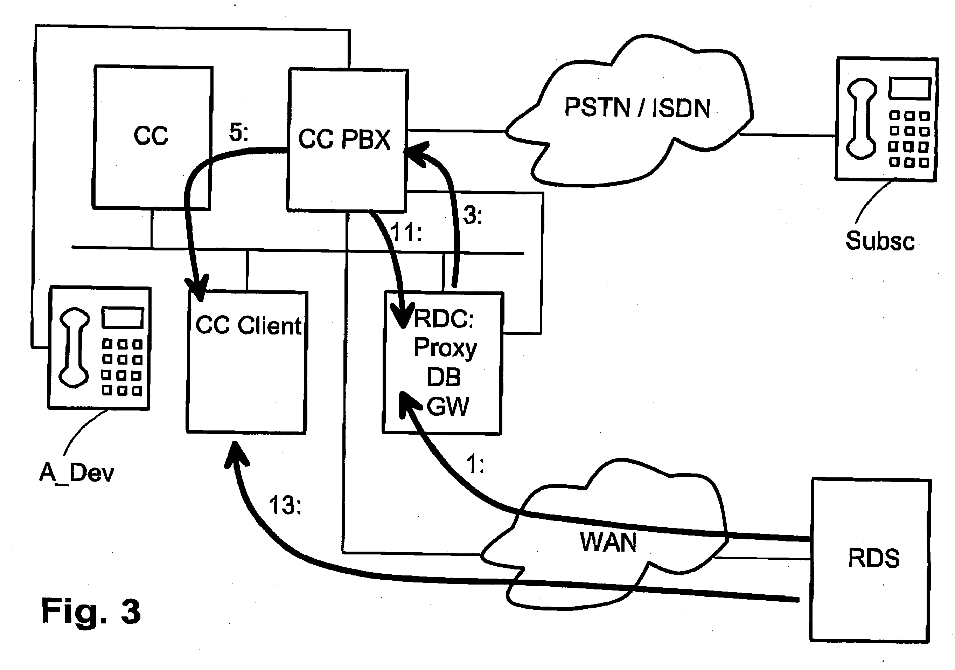

Die einzelnen Schritte der Anschaltung und des Verbindungsaufbaus sind in der Übersicht der Figur 3 zu entnehmen. Der Verbindungsaufbaus läuft in der Übersicht wie folgt ab:
- Der Endkunde geht an Multimedia-Terminal RD, das ist beispielsweise ein Multimedia-Personalcomputer, auf dem ein Remote Desk Service RDS abläuft. Ein solches Multimedia-Terminal RD ist dabei konstruktiv einigermassen vandalenresisteat ausgebildet.
- Der Endkunde wählt über eine grafische Oberfläche GUI aus, in welcher Sprache er bedient werden will und welche Spezialisierung der zu kontaktierende Berater, das ist ein Agent, haben soll. Diese Angaben werden von der Nebenstelle CC PBX so ausgewertet, dass ein Anruf an jenen Agenten geleitet wird, der dem vom Endkunden gewünschten Profil möglichst entspricht. In der Fachsprache heisst diese Art Lenkung von Anrufen «skill based routing»,
- Die Applikation RDS kennt jetzt die Kundenbedürfnisse wie Sprache, Fähigkeit des Agenten und initiiert eine Sprachverbindung zum RDC. Der korrespondierende Meldungsfluss ist in der Figur 3 mit «1:» angegeben. Während dieser Zeit wird dem Endkunden eine Video-Warteschlange eingeblendet.

Das Remote Desk Center RDC initiiert bzw. fingiert einen Anruf Call in der bestehenden Telephonie/Call Center Infrastruktur CC PBX, in der Figur 3 mit «3:» angegeben. Das ziel des Calls ist dabei wie vorgängig erläutert abhängig von der getroffenen Auswahl des Endkunden am Gerät RD.

Dieser Anruf wird von der bestehenden Telephonie/Call Center Infrastruktur wie ein gewöhnlicher Kundenanruf behandelt und an einen freien Agenten verteilt, dies ist entsprechend dargestellt mit «5:», dabei ist das vom Agenten benutzte Gerät symbolisch mit A-Dev angegeben, wie vorstehend erläutert, ist dieser Ausführungsform eine Client-Server Infrastruktur für die Call Center Arbeitsplätze zugrunde gelegt.

Wenn der Anruf vom Agenten angenommen wird, wird von der bestehenden Telephonie Infrastruktur die Telefon-Nummer des betroffenen Agenten dem Remote Desk Center RDC mitgeteilt, z.B. über DSS1, Q-SIG oder andere CC PBX Protokolle; die korrespondierende Meldung ist mit «11;» bezeichnet.

Das Remote Desk Center RDC wird zu der gelieferten Telefon-Nummer die SIP URI des Rechners des betreffenden Agenten zuordnen und der Applikation RDS auf dem Mültimediaterminal RD mitteilen,

Die Applikation RDS baut jetzt mittels dem SIP Protokoll eine videoverbindung auf die gelieferte SIP URI auf, siehe dazu «13:» in der Figur 3.

Weil die Verbindung zwischen der Applikation RDS und der Video-Applikation RDA des Agenten RDA parallel zu einem normalen Anruf aufgebaut wird, kann dieser Anruf vom Call Center überwacht werden.
Diese Ankopplung eines Multimedialen Terminals RD gewährleistet, dass:
Der Video-Call wird statistisch erfasst;
ein Online Monitoring wie ein Warteschlangen-Status und Agenten-Status wird auch für den Video-Call gewährleistet
ein «skill based routing» ist auch für einen Video-Call dank der Fingierung wie ein gewöhnlicher Anruf möglich.

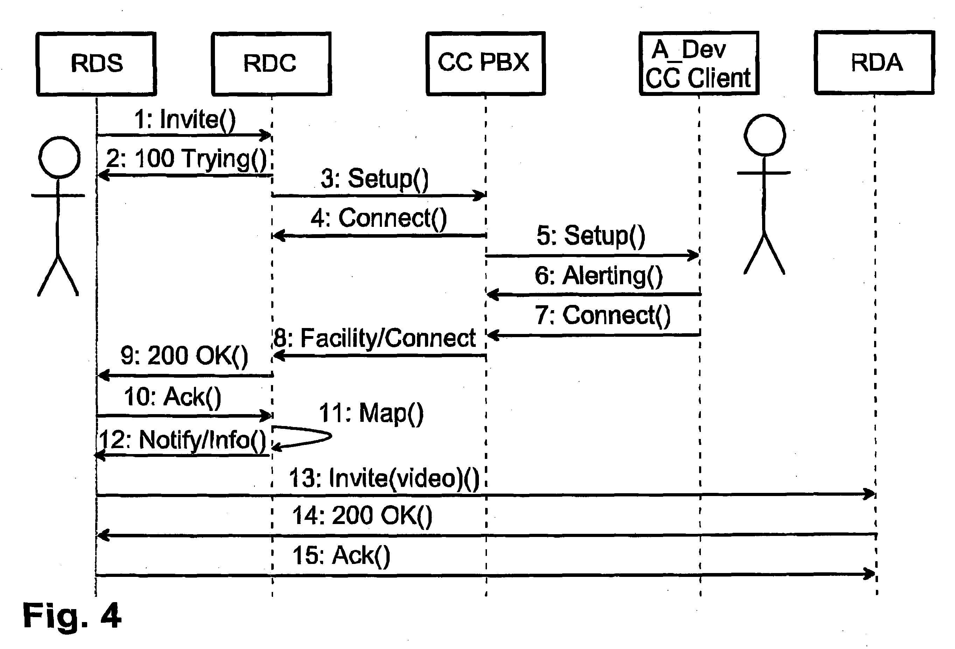

Der Meldungsablauf gemäss der Figur 4 ist detailliert wie folgt:
1: INVITE RDS → RDC:
   Der Endkunde entscheidet, das Call Center CC zu kontaktieren und drückt die entsprechende Taste auf der graphischen Oberfläche GUI der Applikation RDS. Diese sendet eine SIP INVITE Meldung zum RDC. Hier ist zu beachten, dass das Remote Desk Center RDC mehrere SIP URI's registriert, eine für jede Servicenummer des Video Service im Call Center. Die Applikation RDS entscheidet anhand der Benutzerauswahl (welche SIP URI zu kontaktieren ist.
2: 100 TRYING RDC → RDS:
   Das Remote Desk Center RDC meldet der Applikation RDS, dass die Meldung INVITE akzeptiert wurde.
3: SETUP RDC → CC PBX
   Ein Anruf in Richtung Call Center CC PBX wird vom Remote Desk Center RDC initiiert. Die gewählte Servicenummer ist abhängig von der SIP URI im «To:» Kopffeld der Meldung INVITE. Im Remote Desk Center RDC ist dazu eine Tabelle vorhanden, wo die Abbildung SIP URI → Servicenummer definiert ist. Dies kann als Teil der Datenbasis DB ausgebildet sein. Die Teilnehmerverrnittlungsanlage CC PBX versucht, den Anruf (Sprachdienst) zu einem freien Agenten durchzuschalten.
4: CONNECT CC PBX → RDC
   Für den Fall, wo kein Agent frei wäre, könnte die Teilnehmervermittlungsanlage CC PBX den Anruf temporär zu einem Ansageport verbinderi. In diesem Fall wird eine CONNECT Meldung von der CC PBX zum Remote Desk Center RDC gesendet. Dieses muss die Meldung CONNECT analysieren und überprüfen, ob der Anruf zu einem Agenten durchgeschaltet oder sonst verbunden war, dies wird mit dem Parameter «connected number» geprüft. Dies ist nur möglich, wenn im Remote Desk Center die möglichen Rufnummern der Agenten verfügbar sind.
5: SETUP CC PBX → Agent Telefongerät A_Dev die Teilnehmervezmittlungsanlage CC PBX findet einen freien Agenten und übergibt den Anruf diesem Agenten bzw. dem ihm zugeordneten Gerät A_Dev,
6: ALERTING Agent Telefon A_Dev → CC PBX Das Telefongerät A_Dev des Agenten klingelt.
7: CONNECT Agent Telefon → CC PBX Der Agent antwortet.
8: FACILITY or CONNECT CC PBX → RDC
   Sobald der Agent antwortet, wird eine Meldung CONNECT oder Meldung FACILITY (falls der Anruf schon mit einem Ansageport verbunden war, siehe 4:) in Richtung Remote Desk Center RDC von der CC PBX generiert. Diese Meldung muss die Rufnummer des Agenten zwingend enthalten, nämlich «connected number» in der Meldung CONNECT bzw. «redirection number» in der Meldung FACILITY, um diese Art der Anschaltung bzw. Integration zu ermöglichen.
9: 200 OK RDC → RDS
   Die Applikation RDS am Gerät RD wird benachrichtigt, dass der Anruf von einem Agenten beantwortet wurde.
10: ACK RDS → RDC
   Das Remote Desk Center RDC wird benachrichtigt, dass d Die Applikation RDS am Gerät RD die 200 OK Meldung empfangen hat.
   Damit ist die erste Session aufgebaut zwischen RDS und RDC. Über diese Session wird der Audio Kanal aufgebaut. Audio Daten fliessen von RDS zu RDC und vom RDC über die CC PBX zum Telefon A_Dev des Agenten.
11: Auflösung der RDA SIP URI
   Das Remote Desk Center RDC kennt die Rufnummer des Agenten und muss die zugehörige SIP URI herausfinden, die Beziehung Rufnummer/SIP URI könnte zum Beispiel in einer Konfigurationsdatei gespeichert sein.
12: NOTIFY or INFO RDC → RDS
   Das Remote Desk Center RDC übergibt die SIP URI der Video-Applikation des Agenten über eine Meldung NOTIFY oder eine Meldung INFO SIP Meldung der Applikation am Gerät RD.
13: INVITE RDS→RDA
   Die Applikation RDS kennt jetzt die SIP URI des Agenten der den ersten Anruf beantwortet hat und kann eine direkte Session zur Video-Applikation RDA aufbauen. Diese zweite Session dient zum Aufbau der videokommunikation zwischen der Applikation RDS und der Video-Applikation RDA.
14: 2000K RDA → RDS
   Die Video-Applikation RDA akzeptiert die Meldung INVITE.
15: ACK RDS → RDA
   Die Video-Applikation RDA wird benachrichtigt, dass die Applikation RDS am Gerät RD die Meldung 200 OK empfangen hat. Die zweite Session ist aufgebaut, und die Video Daten können jetzt direkt zwischen den Applikation RDS und RDA fliessen.

Eine weitere Implementation der vorliegenden Erfindung kann wie folgt ausgeführt sein:
Der Endkunde kontaktiert das-Call Center mit einem gewöhnlichen SIP Client. Das RDC baut die Session für den videodienst zum Applikation RDA auf; die Video-Daten fliessen vom SIP
Client zum Remote Desk Center RDC und von dort werden sie zur Applikation RDA weitergeleitet. Der Vorteil dieser Implementation ist, dass der Endkunde keine spezialisierte Applikation braucht um mit dem Call Center zu kommunizieren. Das Prinzip der Integration ins Call Center ist aber gleich.

Eine weitere Alternative ist die Video Integration in eine bestehende voIP Call Center Infrastruktur. In diesem Fall wird das RDC statt mit einer CC PBX mit einer CC VoIP Einheit zusammenwirken, der prinzipielle Ablauf bleibt aber der selbe.

### Liste der verwendeten Akronyme und Bezugszaichen

- A_Dev: Agentenarbeitsplatz, Agentenplatz, Gerät des Agenten
- Agent: Berater, Person des Call Centers
- CC: Call Center
- CC Client: auf dem Agentenplatz ablaufende Applikation
- CC PBX: Call Center Private Branch Exchange, Nebenstelle, Teilnehmervermittlungsanlage
- DB: Datenbank, Datenbasis
- DSS1: Digital Subscriber Signaling System no. 1
- MCU: Multipoint Control Unit
- PSTN: Public Switched Telephone Network
- Q-SIG: Q-interface signalling protocol
- RD: Multimedia-Terminal, Remote Desk, Gerät
- RDA: Remote Desk Agent, Video-Applikation des Agenten
- RDC: Remote Desk Center, zentrale Komponenten umfassend. Gateway GW, Datenbasis DB und SIP Proxy
- RDS: Remote Desk Service, Applikation des Kunden am RD
- SIP: Session Initiation Protocol gemäss IETF RFC 3261
- Subsc: Subscriber, Teilnehmer; keine Person
- URI: Uniform Resource Identifier
- User: Kunde am Gerät RD
- VoIP: Voice over IP
- WAN: Wide Area Network

### Literaturliste

- [1]: FR 2 848 712 A1 «automate de forme humanoïde» S.A.S émotion system, Société par actions simplifiée.
- [2]: WO 00/79756 A3 «System and method for providing value-added services (VAS) in an integrated telecommunications network using session initiating protocol (SIP) *»* Tlefonaktiebolaget LM Ericsson, S - 1266 25 Stockholm
- [3]: Gartner Symposium ITXFO Using Technology to deliver Multichannel Integration 31 October - 4 November 2004, Cannes; www.gartner.com

## Patentansprüche

1. Verfahren zur Ankopplung eines Multimedia-Terminals (RD) an ein an ein leitungsvermitteltes Telekommunikationsnetz (PSTN/ISDN) angeschlossenes Call Center (CC), wobei
- das Call Center (CC) über eine Teilnehmervermittlungsanlage (PBX) mit dem öffentlichen leitungsvermittelten Telekommunikationsnetz (PSTN, ISDN) verbunden ist
- das Call Center (CC) eine Mehrzahl von Agentenplätzen (A_Dev, CC Client) aufweist und
- das Multimedia-Terminal an ein paketvermittelndes Netz (WAN) angeschlossen ist
**gekennzeichnet durch** die Verfahrensschritte
A von einer Applikation (RDA) auf dem Multimedia-Terminal (RD) eine Meldung ( Invite() ) an ein Remote Desk Center (RDC) übermittelt, wobei das Remote Desk Center (RDC) mit der Teilnehmervermittlungsanlage (PBX) verbunden ist;
B das Remote Desk Center (RDC) initiiert mit der empfangenen Meldung ( Invite () ) über die Teilnehmervermittlungsanlage (FBX) einen Anruf aus dem leitungsvermittelten Telekommunikationsnetz (PSTN, ISDN);
C der im Verfahrensschritt B erzeugte Anruf wird an einen Agentenplatz (A_Dev, CC Client) durchgeschaltet;
D Nach erfolgter Durchschaltung gemäss dem verfahrensschritt C wird zwischen dem Agentenplatz (A-Dev) und dem Multimedia-Terminal (RD) eine Videoverbindung etabliert.

2. Verfahren nach Anspruch 1,
**dadurch gekennzeichnet dass**
im Verfahrensschritt C eine die Rufnummer des Agentenplatzes (A_Dev, CC Client) enthaltende Meldung (8:, CONNECT) von der Teilnehmervermittlungsanlage (CC PBX) an das Remote Desk Center (RDC) übermittelt wird.

3. Verfahren nach Anspruch 3,
**dadurch gekennzeichnet dass**
das Remote Desk Center (RDC) eine Datenbasis (DB) enthält und für die Ausführung des Verfahrensschrittes D im Remote Desk Center (RDC) eine Zuordnung der Telefonnummern der Agentenplätze (A_Dev, CC Client) zu den Adressen (SIP URI) der auf den Agentenplätzen (A_Dev, CC Client) ablaufenden videoapplikationen (RDA) in der Datenbasis (DB) gespeichert ist.

4. Verfahren nach Anspruch 3,
**dadurch gekennzeichnet dass**
im Verfahrensschritt D
- mit einer Meldung (12: Notify/Info) wird die Adresse (SIP URI) der auf dem Agentenplatz (A_Dev, CC Client) ablaufenden Videoapplikation (RDA) an die auf dem - Multimedia-Terminal (RD)ablaufende Applikation (RDS) übermittelt;
- mit einer Meldung (13: Invite (Video) ( ) ) wird die Adresse (SIP URI) der auf dem mulcimedia-Terminal (RD) ablaufenden Applikation an die am Agentenplatz (A_Dev) ablaufende Videoapplikation (RDA) gesandt.

5. Verfahren nach einem der Ansprüche 1 bis 4,
**dadurch gekennzeichnet dass**
für den Meldungsablauf zwischen der Applikation auf dem Multimedia-Terminal und den Applikationen auf einm Agentenplatz (A_Dev, CC Client) das Protokoll SIP gemäss RFC 3261 eingesetzt ist.

6. Anordnung zur Ankopplung eines Multimedia-Terminals (RD) an ein an ein leitungsvermitteltes Telekommunikationsnetz (PSTN/ISDN) angeschlossenes Call Center (CC), wobei:
- das Call Center (CC) über eine Teilnehmez-vermittlungsanlage (PBX) mit dem öffentlichen leitungsvermittelten Telekommunikationsnetz (PSTN, ISDN) verbunden ist
- das Call Center (CC) eine Mehrzahl von Agentenplätzen (A_Dev, CC Client) aufweist und
- das Multimedia-Terminal an ein paketvermittelndes Netz (WAN) angeschlossen ist
**dadurch gekennzeichnet dass**
die Teilnehmervermittlungsanlage (CC PBX) über ein Remote Desk Center mit dem Multimediaterminal (RD) verbindbar ist, in dem von einer Applikation (RDA) auf dem Multimedia-Terminal (RD) eine Meldung ( Invite() ) an das Remote Desk Center (RDS) übermittelt wird;
dass im Remote Desk Center (RDC) ein Mittel vorgesehen ist, das über die Teilnehmervermittlungsanlage (CC PBX) einen Anruf aus dem leitungsvermittelten Telekommunikationsnetz (PSTN, ISDN) initiiert nach der empfangenen Meldung ( Invite () );
dass nach erfolgter Durchschaltung des initiierten Anrufes an einen Agentenplatz (A_Dev, CC Client) eine Videoverbindung; zwischen dem Agentenplatz (A-Dev, CC Client) und dem Multimedia-Terminal (RD) führbar ist.

7. Anordnung nach Anspruch 6,
**dadurch gekennzeichnet, dass**
das Remote Desk Center (RDC) eine Datenbasis (DB) enthält, in der eine Zuordnung der Telefonnummern der Agentenplätze (A_Dev, CC Client) zu den Adressen (SIP URI) der auf den Agentenplätze (A_Dev, CC Client) ablaufenden Videoapplikationen gespeichert ist.

8. Anordnung nach Ansprüche 6 oder 7,
**dadurch gekennzeichnet, dass**
das Remote Desk Center (RDC) ein Gateway (GW) für die Kommunikation zur Teilnehmervermittlungsanlage aufweist.

9. Anordnung nach einem der Ansprüche 6 bis 8,
**dadurch gekennzeichnet, dass**
das Multimediaterminal (RD) einen Drucker für die Ausgabe von Billetten und eine Einheit für das Bezahlen mit Bargeld oder mit einer Kreditkarte aufweist.

## Geänderte Patentansprüche

### Geänderte Patentansprüche gemäss Regel 86(2) EPÜ.

**1.** Verfahren zur Ankopplung eines Multimedia-Terminals (RD) an ein an ein leitungsvermitteltes Telekommunikationsnetz (PSTN/ISDN) angeschlossenes Call Center (CC), wobei
- das Call Center (CC) über eine Teilnehmervermittlungsanlage (PBX) mit dem öffentlichen leitungsvermittelten Telekommunikationsnetz (PSTN, ISDN) verbunden ist
- das Call Center (CC) eine Mehrzahl von Agentenplätzen (A_Dev, CC Client) aufweist und
- das Multimedia-Terminal an ein paketvermittelndes Netz (WAN) angeschlossen ist
**gekennzeichnet durch** die Verfahrensschritte
A von einer Applikation (RDA) auf dem Multimedia-Terminal (RD) wird eine Meldung ( Invite() ) an ein Remote Desk Center (RDC) übermittelt, wobei das Remote Desk Center (RDC) mit der Teilnehmervermittlungsanlage (PBX) verbunden ist;
B das Remote Desk Center (RDC) fingiert mit der empfangenen Meldung ( Invite() ) über die Teilnehmervermittlungsanlage (PBX) einen Anruf aus dem leitungsvermittelten Telekommunikationsnetz (PSTN, ISDN);
C der im Verfahrensschritt B erzeugte Anruf wird an einen Agentenplatz (A_Dev, CC Client) durchgeschaltet;
D Nach erfolgter Durchschaltung gemäss dem Verfahrensschritt C wird zwischen dem Agentenplatz (A-Dev) und dem Multimedia-Terminal (RD) eine Videoverbindung etabliert.

**2.** Verfahren nach Anspruch 1,
**dadurch gekennzeichnet dass**
im Verfahrensschritt C eine die Rufnummer des Agentenplatzes (A_Dev, CC Client) enthaltende Meldung (8:, CONNECT) von der Teilnehmervermittlungsanlage (CC PBX) an das Remote Desk Center (RDC) übermittelt wird.
